# EUROPÄISCHE PATENTSCHRIFT

(11) **EP 2 110 579 B1**
(45) Veröffentlichungstag und Bekanntmachung des Hinweises auf die Patenterteilung: **04.05.2011**
(21) Anmeldenummer: 08007381.0
(22) Anmeldetag: 15.04.2008
(51) Int. Cl.: F16H 19/06

(54) **Elektrischer Linearantrieb**
Electric linear drive device
Entraînement linéaire électrique

(43) Veröffentlichungstag der Anmeldung: 21.10.2009
(73) Patentinhaber: FESTO AG & Co. KG, 73734 Esslingen (DE)
(72) Erfinder: Angué, Eric, 70806 Kornwestheim (DE); Kopp, Simone, 73734 Esslingen (DE)
(74) Vertreter: Abel, Martin

(56) Entgegenhaltungen:
- EP-B- 0 735 296
- WO-A-2008/032174
- DE-A1-102007 013 446
- FR-A- 2 684 034

## Beschreibung

Die Erfindung betrifft einen elektrischen Linearantrieb, mit einem Gehäuse, das zwei stirnseitige Abschlussdeckel und ein sich dazwischen erstreckendes Zwischenstück aufweist, die gemeinsam einen Gehäuseinnenraum begrenzen, in dem ein um zwei im Bereich der Abschlussdeckel angeordnete Umlenkrollen herumgeschlungener Zahnriemen angeordnet ist, der durch einen in der Wandung des Zwischenstückes ausgebildeten Längsschlitz hindurch mit einem außerhalb des Gehäuses angeordneten Abtriebsteil bewegungsgekoppelt ist, wobei ein Trum des Zahnriemens den schmäler als der Zahnriemen ausgebildeten Längsschnitts von innen her abdeckt und wobei wenigstens eine Umlenkrolle im Innern des ihr zugeordneten Abschlussdeckels angeordnet ist.

Ein aus der EP 0 735 296 B1 bekannter Linearantrieb dieser Art enthält ein rohrförmiges Zwischenstück mit stirnseitig daran angeordneten becherförmigen Abschlussdeckeln. In den Abschlussdeckeln ist je eine drehbare Umlenkrolle angeordnet, von denen eine angetrieben ist, um einen um beide Umlenkrollen herumgeschlungenen Zahnriemen anzutreiben. Einer der Trume des Zahnriemens greift an einem außerhalb des Gehäuses angeordneten, linear verschiebbaren Abtriebsteil an, wobei die Kraftübertragung durch einen die Wandung des Zwischenstückes durchsetzenden Längsschlitz hindurch stattfindet. Indem dieser Längsschlitz schmäler als der zugeordnete Trum des Zahnriemens ausgebildet ist, deckt der Zahnriemen den Längsschlitz von innen her ab, sodass ein übermäßiger Eintritt von Verunreinigungen vermieden wird. Zur Montage und Demontage des Zahnriemens kann das die Funktion eines Spannschlosses übernehmende Abtriebsteil zerlegt werden und können die Abschlussdeckel von dem Zwischenstück abgenommen werden. Da der Austausch eines verschlissenen Zahnriemens praktisch ein komplettes Zerlegen des Linearantriebes erfordert, ist diese Maßnahme sehr zeitaufwendig und führt auch nicht zuletzt deshalb zu langen Stillstandszeiten damit ausgestatteter Maschinen, weil der Linearantrieb vorübergehend komplett ausgebaut werden muss. Die EP 0 735 296 B1 enthält die Merkmale des Oberbegriffs des Anspruchs 1.

Aus der FR 2 684 034 A1 ist ein ebenfalls mit einem Zahnriemen ausgestatteter elektrischer Linearantrieb bekannt, bei dem sich das Zwischenstück über praktisch die gesamte Gehäuselänge erstreckt und die Umlenkrollen innerhalb des Zwischenstückes platziert sind. Die Abschlussdeckel bestehen aus stirnseitig angesetzten, flachen Abschlussplatten, von denen lediglich eine Zunge wegragt, die stirnseitig in den Längsschlitz des Zwischenstückes eingreift, um die zugeordnete Umlenkrolle abzudecken. Um den Zahnriemen auszutauschen, muss auch hier mindestens ein Abschlussdeckel komplett entfernt werden.

Die DE 10 2007 013 446 A1 beschreibt einen Linearantrieb mit Zahnriemen, bei dem die Umlenkrollen innerhalb stirnseitiger Abschlussdeckel untergebracht sind, wobei die Montage des Zahnriemens durch stirnseitige Öffnungen der Abschlussdeckel hindurch stattfinden kann, die durch Platten verschließbar sind. In diesem Fall setzt ein Austausch des Zahnriemens nicht nur eine Zugänglichkeit des Linearantriebes von einer Längsseite her voraus, sondern zusätzlich eine Zugänglichkeit von der Stirnseite her, was am Einsatzort häufig nicht gewährleistet ist. Somit muss auch dieser Linearantrieb für den Austausch des Zahnriemens häufig aus der zugeordneten Maschine ausgebaut werden. Es kommt hinzu, dass bei diesem Linearantrieb der Zahnriemen liegend installiert ist, sodass er den Längsschlitz nicht von innen her abzudecken vermag und folglich ein zusätzliches Abdeckband benötigt wird, das den Längsschlitz außen überdeckt.

Es ist die Aufgabe der vorliegenden Erfindung, Maßnahmen vorzuschlagen, die bei einem Linearantrieb der eingangs genannten Art einen einfachen und raschen Wechsel des Zahnriemens gestatten.

Zur Lösung dieser Aufgabe ist vorgesehen, dass der Längsschlitz an wenigstens einer Stirnseite in eine sich in axialer Verlängerung anschließende schlitzförmige Montageaussparung übergeht, die in der sich an das Zwischenstück anschließenden Seitenwand des die Umlenkrolle aufnehmenden Abschlussdeckels ausgebildet ist und deren Breite größer ist als die Breite des Zahnriemens, sodass der Zahnriemen zu seiner Montage und Demontage durch die Montageaussparung hindurchführbar ist.

Somit lässt sich der Zahnriemen problemlos von der den Längsschlitz aufweisenden Längsseite des Gehäuses her austauschen, ohne einen Abschlussdeckel vom Zwischenstück abnehmen zu müssen. Die bezüglich dem Längsschlitz breitere Montageaussparung ermöglicht bei der Montage ein stirnseitiges Einfädeln des Zahnriemens in das Zwischenstück und unter den Längsschlitz, ohne den Abschlussdeckel vom Zwischenstück entfernen zu müssen. Auf gleichem Wege, nur in umgekehrter Richtung, lässt sich der Zahnriemen bei einer Demontage leicht aus dem Zwischenstück herausziehen und dann durch die Montageaussparung hindurch nach außen führen. Diese Vorteile lernt man besonders dann zu schätzen, wenn der den Längsschlitz von innen her verschließende Trum des Zahnriemens unterteilt ist und an seinen Endabschnitten zur Verbindung mit dem Abtriebsteil dienende Verschlusselemente trägt, die ein Verdrehen des Zahnriemens zum Zwecke eines unmittelbaren Hindurchführens durch den Längsschlitz unmöglich machen. Auch diese Verschlusselemente können dann durch die zugeordnete Montageaussparung hindurch ein- und ausgefädelt werden.

Vorteilhafte Weiterbildungen der Erfindung gehen aus den Unteransprüchen hervor.

Insbesondere abhängig von der Art und Weise der Verbindung des Zahnriemens mit dem Abtriebsteil, kann lediglich einer der Abschlussdeckel oder können beide Abschlussdeckel in axialer Verlängerung des Längsschlitzes mit einer Montageaussparung der erläuterten Art versehen sein.

Um von am Einsatzort vorzunehmenden Schutzmaßnahmen unabhängig zu sein, ist es zweckmäßig, wenn der Linearantrieb unmittelbar mit einem der jeweiligen Montageaussparung zugeordneten Verschlussdeckel ausgestattet ist, der ein lösbares Verschließen der Montageaussparung ermöglicht. Der Verschlussdeckel kann beispielsweise ein Klappdeckel sein oder lässt sich vorzugsweise komplett abnehmen. Zweckmäßigerweise ist er in der Verschlussstellung durch eine Rastverbindung lösbar am zugeordneten Abschlussdeckel fixiert.

Die Handhabung des Zahnriemens bei seiner Montage und Demontage wird besonders begünstigt, wenn sich die Montageaussparung ausgehend von ihrer dem Zwischenstück zugewandten stirnseitigen Öffnung über den gesamten Durchmesser der zugeordneten Umlenkrolle hinweg erstreckt.

In allen Fällen ist es von Vorteil, wenn sich die Montageaussparung nicht über die gesamte Länge des Abschlussdeckels hinweg erstreckt, sondern vor der dem Zwischenstück abgewandten Stirnfläche vergleichbar einem Sackloch endet. Dadurch kann die äußere Stirnfläche des Abschlussdeckels ungehindert für beliebige Anbauzwecke genutzt werden.

Wie schon angedeutet, ist der dem Längsschlitz zugewandte Trum des Zahnriemens zweckmäßigerweise unterteilt und wird mit seinen beiden daraus resultierenden Endabschnitten gesondert an dem Abtriebsteil befestigt. Jedes hierzu am Zahnriemen angeordnete Verbindungselement kann zusammen mit dem Zahnriemen durch die zugeordnete Montageaussparung hindurch eingeführt und herausgezogen werden.

Das Verbindungselement ist zweckmäßigerweise Bestandteil einer zum Spannen des Zahnriemens verwendbaren Spannvorrichtung. Durch das Vorhandensein der Montageaussparung erhält man in axialer Verlängerung zu dem Längsschlitz einen Freiraum, der insbesondere in Verbindung mit relativ kurzhubigen Linearantrieben das Ansetzen eines zum Betätigen der Spannvorrichtung dienenden Werkzeuges erleichtert.

Letzteres gilt insbesondere auch für solche Fälle, in denen der die Montageaussparung aufweisende Abschlussdeckel zumindest an der Seite des Längsschlitzes seitlich über die Außenfläche des Zwischenstückes vorsteht. Diese Maßnahme wird beispielsweise getroffen, um eine Anschlagfläche zur Vorgabe der Endlage des Abtriebsteils bereitzustellen.

Eine der Umlenkrollen wird üblicherweise als Antriebsrolle genutzt, mit der ein außen an das Gehäuse insbesondere lösbar angesetzter Elektromotor antriebsmäßig gekoppelt ist. Es können an beiden Abschlussdeckeln Schnittstellenmittel vorhanden sein, die den direkten oder indirekten Anbau eines Antriebsmotors gestatten, um wahlweise die eine oder andere Umlenkrolle als Antriebsrolle zu nutzen.

Eine besonders exakte Linearbewegung des Abtriebsteils kann gewährleistet werden, wenn letzteres über eine geeignete Linearführungseinrichtung außen am Zwischenstück linear verschiebbar gelagert ist. Die Linearführungseinrichtung enthält insbesondere mindestens eine mit dem Abtriebsteil kooperierende Führungsschiene.

Nachfolgend wird die Erfindung anhand der beiliegenden Zeichnung näher erläutert. In dieser zeigen:

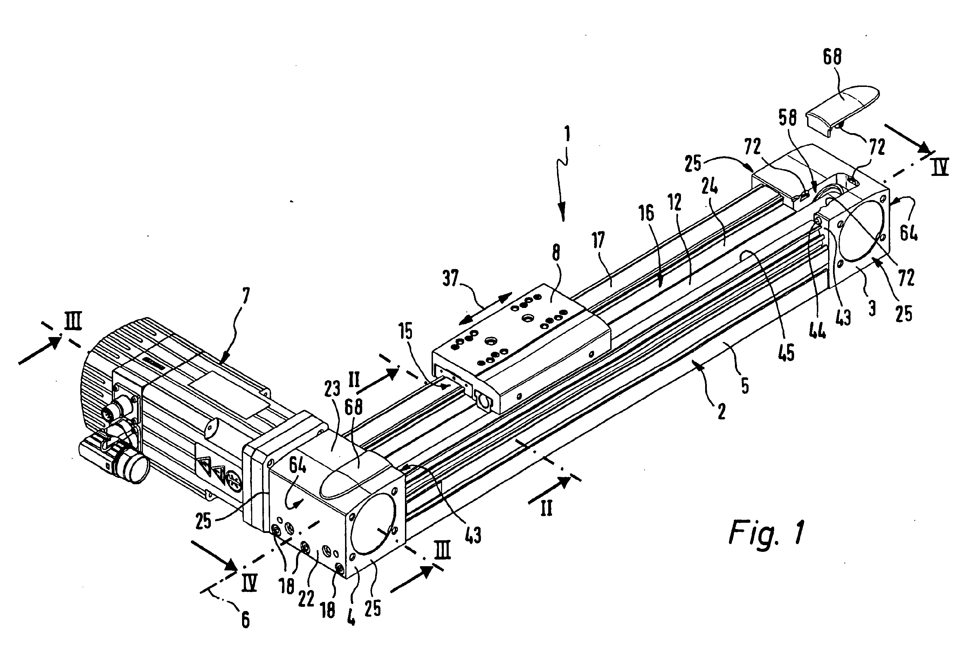

- Figur 1: eine perspektivische Ansicht eines bevorzugten Aus- führungsbeispiels des erfindungsgemäßen Linearan- triebes im abgenommenen Zustand eines zum Ver- schließen einer Montageaussparung dienenden Ver- schlussdeckels,
- Figur 2: einen Querschnitt durch den Linearantrieb gemäß Schnittlinie II-II aus Figur 1,
- Figur 3: einen Ausschnitt des Linearantriebes im Querschnitt gemäß Schnittlinie III-III,
- Figur 4: einen Längsschnitt durch den Linearantrieb gemäß Schnittlinie IV-IV aus Figur 1, wobei der in Fi- gur 1 abgenommen gezeigte Verschlussdeckel in Fi- gur 4 im montierten Zustand gezeigt ist,
- Figur 5: eine Seitenansicht des Linearantriebes mit Blick gemäß Pfeil V aus Figur 4, auf die mit einer Monta- geaussparung versehene Seitenwand des einen Ab- schlussdeckels, und zwar bei entferntem Verschluss- deckel, und
- Figur 6: einen Längsschnitt durch den in Figur 5 gezeigten Endbereich des Linearantriebes, wobei eine Phase während der Montage oder Demontage des Zahnriemens gezeigt ist.

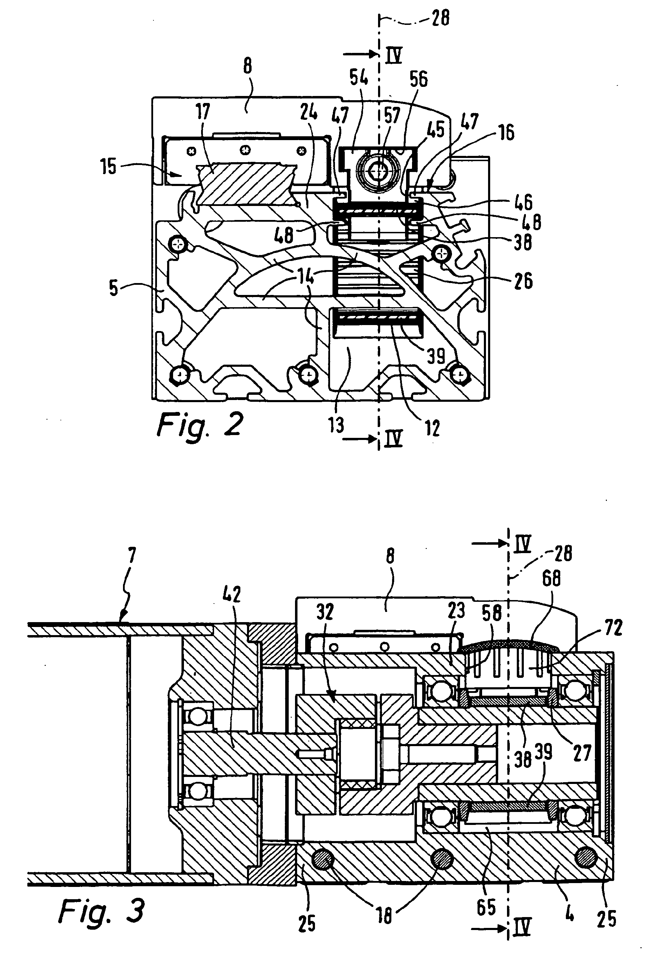

Der in seiner Gesamtheit mit Bezugsziffer 1 bezeichnete elektrische Linearantrieb verfügt über ein längliches Gehäuse 2, das sich im Wesentlichen aus zwei stirnseitigen, ersten und zweiten Abschlussdeckeln 3, 4 und einem sich zwischen diesen beiden Abschlussdeckeln 3, 4 erstreckenden länglichen Zwischenstück 5 zusammensetzt. Das Zwischenstück 5 ist als Hohlprofilteil ausgebildet und enthält in seinem Innern, wie die Figur 2 verdeutlicht, einen oder mehrere über die gesamte Länge durchgehende Hohlräume. Vorzugsweise handelt es sich bei ihr um ein stranggepresstes Profilteil.

Die Längsachse des Gehäuses 2 ist strichpunktiert bei 6 angedeutet.

Angetrieben wird der Linearantrieb 1 mittels eines Elektromotors 7, der außen an den zweiten Abschlussdeckel 4 in insbesondere lösbarer Weise direkt oder indirekt angeflanscht ist.

Der Linearantrieb 1 ist ein sogenannter Zahnriemenantrieb. Er enthält ein außen an dem Zwischenstück 5 in dessen Längsrichtung verschiebbar gelagertes Abtriebsteil 8, das mit einem Zahnriemen 12 antriebsmäßig verbunden ist, der sich in einem gemeinsam von den beiden Abschlussdeckeln 3, 4 und dem Zwischenstück 5 begrenzten Gehäuseinnenraum 13 erstreckt. Gemäß Figur 2 kann der Gehäuseraum 13 durch aussteifend wirkende Zwischenwände 14 im Innern des Zwischenstückes 5 in einzelne Teilräume unterteilt sein. Der Zahnriemen 12 wird von dem Elektromotor 7 angetrieben.

Das Abtriebsteil 8 ist vorzugsweise schlittenförmig ausgeführt. Es ist mittels einer Linearführungseinrichtung 15 im Bereich einer längsseitigen ersten Außenfläche 16 des Zwischenstückes 5 in Achsrichtung der Längsachse 6 verschiebbar geführt. Die Linearführungseinrichtung 15 umfaßt mindestens eine außen direkt an dem Zwischenstück 5 angeordnete, sich über die gesamte Länge des Zwischenstückes 5 erstreckende Führungsschiene 17, die von dem Abtriebsteil 8 umgriffen ist.

Die beiden Abschlussdeckel 3, 4 sind topfförmig ausgebildet und sind mit ihrer offenen Seite voraus an die jeweils zugewandte Stirnfläche des Zwischenstückes 5 angesetzt. Zur Befestigung sind insbesondere Schrauben 18 vorhanden.

Jeder Abschlussdeckel 3, 4 besitzt eine durchbrechungslose stirnseitige Abschlusswand 22 sowie mehrere rechtwinkelig zur Längsachse 6 orientierte Seitenwände. Eine erste Seitenwand 23 davon schließt sich in axialer Verlängerung an eine erste Seitenwand 24 des Zwischenstückes 5 an, die die längsseitige erste Außenfläche 16 definiert.

Jeder Abschlussdeckel 3, 4 verfügt außerdem über zwei um 90° bezüglich der ersten Seitenwand 23 versetzte, einander entgegengesetzt orientierte zweite Seitenwände 25, die als mechanische Schnittstellen zur wahlweisen Montage des Elektromotors 7 ausgebildet sind. Exemplarisch ist der Elektromotor 7 an einer zweiten Seitenwand 25 des zweiten Abschlussdeckels 4 angebracht.

Im Innern des hohl ausgebildeten ersten Abschlussdeckels 3 befindet sich eine um ihre Längsachse 26a drehbare erste Umlenkrolle 26. Eine zweite Umlenkrolle 27 sitzt im Innern des zweiten Abschlussdeckels 4 und ist dort um ihre Längsachse 27a drehbar. Die beiden Längsachsen 26a, 27a verlaufen parallel zueinander und rechtwinkelig zur Ausdehnungsebene des jeweils zugeordneten Paares zweiter Seitenwände 25.

Der schon erwähnte Zahnriemen 12 ist um die beiden Umlenkrollen 26, 27 herumgeschlungen. Er erstreckt sich hierbei in einer strichpunktiert angedeuteten Umlaufebene 28, die rechtwinkelig zu den Längsachsen 26a, 27a verläuft und zugleich die ersten Seitenwände 23, 24 im rechten Winkel schneidet.

Die im ersten Abschlussdeckel 3 angeordnete erste Umlenkrolle 26 steht über eine Kupplungseinrichtung 32 mit dem Elektromotor 7 in Drehantriebsverbindung. Zumindest sie trägt am Außenumfang eine Außenverzahnung 33, die mit einer zugewandten Innenverzahnung 34 des Zahnriemens 12 in Eingriff steht.

Eine durch den Elektromotor 7 hervorgerufene, durch einen Doppelpfeil 35 angedeutete Rotationsbewegung 35 der ersten Umlenkrolle 26 hat auf Grund des Verzahnungseingriffes eine ebenfalls durch einen Doppelpfeil angedeutete Umlaufbewegung 36 des Zahnriemens 12 um die beiden Umlenkrollen 26, 27 zur Folge und bewirkt die wiederum durch einen Doppelpfeil angedeutete lineare Abtriebsbewegung 37 des Abtriebsteils 8, das mit einem der beiden sich zwischen den beiden Umlenkrollen 26, 27 erstreckenden Trume des Zahnriemens 12 antriebsmäßig verbunden ist. Die jeweilige Bewegungsrichtung hängt von der Drehrichtung der Ausgangswelle 42 des Elektromotors 7 ab. Dementsprechend kann das Abtriebsteil 8 zu einer Abtriebsbewegung 37 zwischen zwei Endlagen angetrieben werden, die dadurch definiert sind, dass das Abtriebsteil 8 an einem seitlich über die erste Außenfläche 16 des Zwischenstückes 5 vorstehenden Deckelabschnitt 43 des einen oder anderen Abschlussdeckels 3, 4 zur Anlage gelangt. Zur Dämpfung des Aufpralls können an diesen Deckelabschnitten 43 bei Bedarf Dämpfungsmittel 44 angeordnet sein, beispielsweise Gummipuffer oder auch Stoßdämpfer.

Die mit der Ausgangswelle 42 gekuppelte erste Umlenkrolle 26 fungiert als Antriebsrolle. Damit bei Bedarf auch die zweite Umlenkrolle 27 alternativ als Antriebsrolle nutzbar ist, ist sie beim Ausführungsbeispiel wie die erste Umlenkrolle 26 als mit der Innenverzahnung 34 kämmendes Zahnrad ausgebildet.

Die antriebsmäßige Verbindung zwischen dem Abtriebsteil 8 und dem einen, im Folgenden als Antriebstrum 38 bezeichneten Trum des Zahnriemens 12 erfolgt durch einen in der Wandung des Zwischenstücks 5 ausgebildeten, sich parallel zu der Längsachse 6 erstreckenden Längsschlitz 45 hindurch. Dieser erstreckt sich über die gesamte Länge des Zwischenstückes 5 und mündet an dessen beiden Stirnflächen zum sich jeweils anschließenden Abschlussdeckel 3, 4 hin aus. Radial außen ist der Längsschlitz 45 zu der ersten Außenfläche 16 hin offen. Radial innen führt er in einen von einem der Hohlräume des Gehäuseinnenraumes 13 gebildeten kanalartigen Aufnahmeraum 46, der ebenfalls zu den beiden Stirnflächen des Zwischenstückes 5 ausmündet und in dem sich der Antriebstrum 38 des Zahnriemens 12 erstreckt.

Wie man insbesondere der Figur 2 entnehmen kann, verfügt der Aufnahmeraum 46 über eine größere Breite als der Längsschlitz 45. Auch die Breite des Zahnriemens 12 ist größer als diejenige des Längsschlitzes 45, sodass sein Antriebstrum 38 den Längsschlitz 45 an beiden Längsseiten ein Stück weit überragt und den Längsschlitz 45 von innen her quasi abdeckt.

Gemäß Figur 2 ist der Längsschlitz 45 längsseits von zwei rippenartigen Vorsprüngen 47 begrenzt, an die sich nach Innen, zum anderen Trum hin, der breitere Aufnahmeraum 46 anschließt.

An der dem anderen Trum 39 zugewandten Innenseite ist der Aufnahmeraum 46 längsseits von zwei weiteren, sich längs erstreckenden rippenartigen Vorsprüngen 48 begrenzt, die den Antriebstrum 38 an der Innenseite untergreifen. Auf diese Weise erreicht man eine zusätzliche Führung des Antriebstrumes 38 und verhindert bei großer Länge des Zwischenstückes 5 ein unerwünschtes Durchhängen des Antriebstrums 38.

Der sich innen unmittelbar an den Längsschlitz 45 anschließende Antriebstrum 38 könnte ununterbrochen, durchgehend ausgebildet sein und beispielsweise durch eine zentrale Befestigungseinrichtung mit dem Abtriebsteil 8 verbunden sein. Die Montage und Demontage des Zahnriemens 12 ist jedoch erheblich vereinfacht, wenn letzterer nicht als in sich geschlossener, endloser Riemen ausgebildet ist, sondern wenn sein Antriebstrum 38 unterteilt ist, sodass sich zwei einander zugewandte Endabschnitte 52a, 52b ergeben, die sich beide in dem kanalförmigen Aufnahmeraum 46 erstrecken. Dies ist beim Ausführungsbeispiel der Fall.

Jeder Endabschnitt 52a, 52b ist mittels einer gleichzeitig zum Spannen des Zahnriemens 12 nutzbaren Spannvorrichtung 53 an dem Abtriebsteil 8 befestigt. Jede Spannvorrichtung 53 umfaßt ein bezüglich dem Abtriebsteil 8 als separater Körper ausgebildetes, vorzugsweise klotzförmiges Verbindungselement 54, an dem der zugeordnete Endabschnitt 52a, 52b des Zahnriemens 12 verankert ist, beispielsweise durch Klemmmittel 55. Das Verbindungselement 54 durchgreift den Längsschlitz 45, wobei der Endabschnitt 52a, 52b innerhalb des Aufnahmeraumes 46 am Verbindungselement 54 fixiert ist. Mit seinem außerhalb des Zwischenstückes 5 liegenden Abschnitt ist das Verbindungselement 54 in eine Aufnahme 56 des Abtriebsteils 8 in Achsrichtung der Längsachse 6 eingesteckt und an dem Abtriebsteil 8 mittels eines beispielsweise von einer Schraube gebildeten Spannelementes 57 befestigt.

Jedes Verbindungselement 54 ist in der Aufnahme 56 in Achsrichtung der Längsrichtung 6 verschiebbar gelagert. Auf diese Weise kann seine bezüglich dem Abtriebsteil 8 eingenommene Relativposition in Abhängigkeit vom Anzugsmoment des zugeordneten Spannelementes 57 variiert und festgesetzt werden. Somit lässt sich die Spannung des Zahnriemens 12 einstellen.

Durch Herausschrauben des zugeordneten Spannelementes 57 kann jedes Verbindungselement 54 vom Abtriebsteil 8 gelöst werden.

Die Betätigung der Spannelemente 57 erfolgt durch Ansetzen eines Betätigungswerkzeuges, insbesondere eines Schraubwerkzeuges, in der axialen Richtung von der Seite des axial gegenüberliegenden Abschlussdeckels 3 oder 4 her.

Die Montage und Demontage des Zahnriemens 12 kann bei zusammengebautem Gehäuse 2 und installiertem Abtriebsteil 8 durchgeführt werden. Ein Zerlegen des Gehäuses 2 ist nicht notwendig. Auch kann der Linearantrieb 1 hierzu in den meisten Fällen unverändert am Einsatzort installiert bleiben.

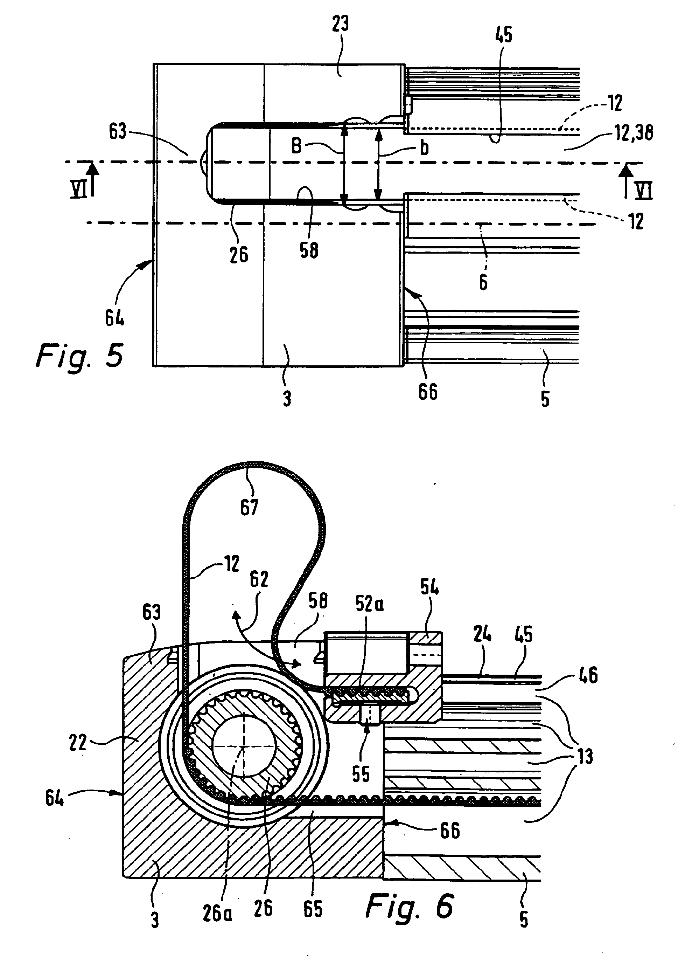

Zwar verhindert der Längsschlitz 45 auf Grund seiner bezüglich dem Zahnriemen 12 geringeren Breite eine Montage und Demontage des Antriebstrumes 38 quer zur Längsachse 6 durch den Längsschlitz 45 hindurch. Speziell dann, wenn an den Endabschnitten 52a, 52b ein starres Verbindungselement 54 angeordnet ist, lässt sich der Zahnriemen 12 selbst durch Verdrillen um seine Längsachse nicht von radial außen her in den Aufnahmeraum 46 einschwenken. Daher ist jeder Abschlussdeckel 3, 4 in der ersten Seitenwand 23 mit einer diese erste Seitenwand 23 durchsetzenden schlitzförmigen Montageaussparung 58 versehen, die sich in axialer Verlängerung des Längsschlitzes 45 unmittelbar an diesen anschließt und deren Breite "B" zumindest minimal größer ist, als die Breite "b" des Zahnriemens 12. Die Längsachse der Montageaussparung 58 fällt mit der Längsachse des Längsschlitzes 45 zusammen, wie dies gut aus Figur 5 ersichtlich ist. Es liegt zudem eine in Breitenrichtung symmetrische Anordnung bezüglich dem Zahnriemen 12 vor, sodass der jeweils innerhalb der Montageaussparung 58 liegende Längenabschnitt des Zahnriemens 12 an seiner Außenseite nicht überdeckt wird, wie dies im Bereich des Zwischenstükkes 5 durch die rippenförmigen Vorsprünge 47 geschieht.

Der Längsschlitz 45 ist wie gesagt stirnseitig zu beiden Abschlussdeckeln 3, 4 hin offen. Die Montageaussparungen 58 sind jeweils an ihrer dem Zwischenstück 5 zugewandten Stirnseite ebenfalls offen. Dadurch ergibt sich in Achsrichtung der Längsachse 6 ein unmittelbarer Übergang zwischen den Längsschlitz 45 und den sich axial beidseits daran anschließenden schlitzförmigen Montageaussparungen 58.

Durch die Montageaussparung 58 hindurch lässt sich der Zahnriemen 12 mit seinem zugeordneten Endabschnitt 52a/52b und dem daran angeordneten Verbindungselement 54 gemäß dem aus Figur 6 ersichtlichen Doppelpfeil 62 in Längssrichtung ein- und ausfädeln, um ein axiales Einführen oder axiales Herausziehen in das Zwischenstück bzw. aus dem Zwischenstück 5 heraus zu ermöglichen. Folglich kann der Antriebstrum 38 in den unter dem Längsschlitz 45 liegenden Aufnahmeraum 46 von der Stirnseite des Zwischenstückes 5 her eingeführt werden und über diese Stirnseite hinweg auch wieder herausgezogen werden, zusammen mit dem gegebenenfalls vorhandenen Verbindungselement 54. Ein Durchtritt durch den Längsschlitz 45 quer zu dessen Längsachse ist nicht erforderlich.

Indem beide Abschlussdeckel 3, 4 eine Montageaussparung 58 enthalten, können beide Endabschnitte des Antriebstrumes 38 in der geschilderten Weise eingesetzt und entnommen werden.

Zweckmäßigerweise ist jede Montageaussparung 58 an der dem Längsschlitz 45 axial abgewandten Stirnseite durch die erste Seitenwand 23 begrenzt. Der begrenzende Wandabschnitt ist bei 63 gezeigt. Somit mündet die Montageaussparung 58 nicht zur äußeren Stirnfläche 64 des Abschlussdeckels 3, 4 aus, sodass letztere uneingeschränkt für Montagemaßnahmen zur Verfügung steht.

Durch die Montageaussparung 58 hindurch ist der die Umlenkrolle 26, 27 aufnehmende Innenraum 65 des betreffenden Abschlussdeckels 3, 4 von außen her zugänglich, und zwar von derjenigen Längsseite des Gehäuses 2 her, an der sich auch der Längsschlitz 45 und das Abtriebsteil 8 befindet. Alle für einen Austausch des Zahnriemens 12 erforderlichen Handhabungsmaßnahmen können somit von dieser einen Längsseite her durchgeführt werden.

Eine optimale Handhabung ergibt sich, wenn sich die Montageaussparung 58 in Achsrichtung der Längsachse 6 ausgehend von der dem Zwischenstück 5 zugewandten inneren Stirnfläche 66 des Abschlussdeckels 3, 4 über den gesamten Durchmesser der in dem Innenraum 65 untergebrachten Umlenkrolle 26, 27 hinweg erstreckt. Dadurch ist es möglich, den Zahnriemen 12 beim Ein- und Ausfädeln ungehindert zu einer Schlaufe 67 zu biegen, die durch die Montageaussparung 58 hindurchführbar ist.

Es ist ferner zweckmäßig, wenn die Länge der Montageaussparung 58 wenigstens der Länge des zugeordneten Verbindungselementes 54 entspricht. Dadurch kann Letzteres 54 besonders bequem ein- und ausgefädelt werden. Es versteht sich, dass gleichzeitig der axiale Abstand der Längsachse 26a, 26b der Umlenkrolle 26, 27 von der inneren Stirnfläche 66 so groß gewählt wird, dass zwischen der inneren Stirnfläche 66 und dem Außenumfang der zugeordneten Umlenkrolle 26, 27 ausreichend Platz verbleibt, um das Verbindungselement 54 hindurchzuführen.

Wie weiter oben erwähnt, verfügen die Abschlussdeckel 3, 4 im Bereich ihrer inneren Stirnfläche 66 zweckmäßigerweise über einen seitlich über das Zwischenstück 5 vorstehenden Abschnitt 43. Da sich die stirnseitige Öffnung der Montageaussparung 58 über die gesamte vorstehende Höhe dieses Deckelabschnittes 43 erstreckt, kann selbst bei Zwischenstücken 5 geringer Länge ein zur Handhabung der Spannelemente 57 genutztes Betätigungswerkzeug problemlos in der axialen Richtung angesetzt werden.

Jede Montageaussparung 58 ist ohne Unterbrechung zu der dem Zwischenstück 5 zugewandten inneren Stirnfläche 66 hin, zur Außenfläche der ersten Seitenwand 23 hin und zu dem Innenraum 65 hin offen. Man kann sie sich generiert vorstellen als Einschnitt, der von der inneren Stirnfläche 66 her in die erste Seitenwand 23 eingebracht wurde.

Zweckmäßigerweise ist jeder Montageaussparung 58 ein ihr lösbares Verschließen ermöglichender Verschlussdeckel 68 zugeordnet. Exemplarisch sind die Verschlussdeckel 68 vollständig vom zugeordneten Abschlussdeckel 3, 4 abnehmbar, wenn die Montageaussparung 58 freigelegt werden soll.

Zur Fixierung am zugeordneten Abschlussdeckel 3, 4 sind am Verschlussdeckel 68 und an der ersten Seitenwand 23 miteinander kooperierende Rastverbindungsmittel 72 ausgebildet, die automatisch ineinander einschnappen, wenn der Verschlussdekkel 68 angesetzt wird. Zum Lösen der Verbindung werden zweckmäßigerweise keine unmittelbar auf die Rastverbindungsmittel 72 einwirkende Werkzeuge benötigt, es genügt, den Verschlussdeckel 68 von Hand oder mittels eines Schraubenziehers auszuhebeln.

Der Verschlussdeckel 68 liegt zweckmäßigerweise an der Außenfläche der ersten Seitenwand 23 um die dort liegende Öffnung der Montageaussparung 58 herum an. Die Rastverbindungsmittel 62 sind an der dem Innenraum 65 zugewandten Innenseite des Verschlussdeckels 68 sowie im Innern der Montageaussparung 58 an deren Seitenrand ausgebildet.

Die Verschlussdeckel 68 bestehen vorzugsweise aus einem Kunststoffmaterial und sind aus einem einzigen Stück gefertigt.

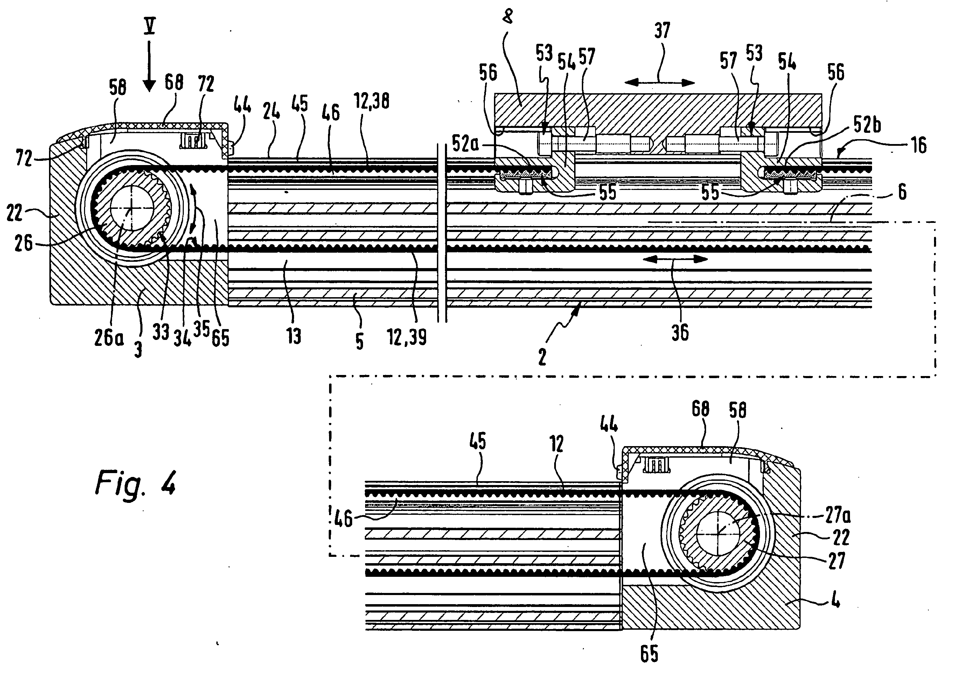

Wie man insbesondere aus Figur 4 entnehmen kann, haben die Verschlussdeckel 68 im Längsschnitt gesehen zweckmäßigerweise eine L-förmige Gestalt. Der größere L-Schenkel erstreckt sich über die Außenfläche der ersten Seitenwand 23, der kürzere L-Schenkel verschließt die an dem seitlich vorstehenden Deckelabschnitt 43 im Bereich der inneren Stirnfläche 66 liegende stirnseitige Öffnung der Montageaussparung 58.

## Patentansprüche

1. Elektrischer Linearantrieb, mit einem Gehäuse (2), das zwei stirnseitige Abschlussdeckel (3, 4) und ein sich dazwischen erstreckendes Zwischenstück (5) aufweist, die gemeinsam einen Gehäuseinnenraum (13) begrenzen, in dem ein um zwei im Bereich der Abschlussdeckel (3, 4) angeordnete Umlenkrollen (26, 27) herumgeschlungener Zahnriemen (12) angeordnet ist, der durch einen in der Wandung des Zwischenstücks (5) ausgebildeten Längsschlitz (45) hindurch mit einem außerhalb des Gehäuses (2) angeordneten Abtriebsteil (8) bewegungsgekoppelt ist, wobei ein Trum (38) des Zahnriemens (12) den schmäler als der Zahnriemen (12) ausgebildeten Längsschlitz (45) von innen her abdeckt und wobei wenigstens eine Umlenkrolle (26, 27) im Innern des ihr zugeordneten Abschlussdeckels (3, 4) angeordnet ist, **dadurch gekennzeichnet, dass** der Längsschlitz (45) an wenigstens einer Stirnseite in eine sich in axialer Verlängerung anschließende schlitzförmige Montageaussparung (58) übergeht, die in der sich an das Zwischenstück (5) anschließenden Seitenwand (23) des die Umlenkrolle (26, 27) aufnehmenden Abschlussdeckels (3, 4) ausgebildet ist und deren Breite (B) größer ist als die Breite (b) des Zahnriemens (12), sodass der Zahnriemen (12) zu seiner Montage und Demontage durch die Montageaussparung (58) hindurchführbar ist.

2. Linearantrieb nach Anspruch 1, **dadurch gekennzeichnet, dass** beide Umlenkrollen (26, 27) in einem Innenraum (65) des jeweils zugeordneten Abschlussdeckels (3, 4) angeordnet sind, wobei beide Abschlussdeckel (3, 4) mit einer in den Innenraum (65) einmündenden Montageaussparung (58) versehen sind.

3. Linearantrieb nach Anspruch 1 oder 2, **dadurch gekennzeichnet, dass** der Montageaussparung (58) ein ihrem lösbaren Verschließen dienender Verschlussdeckel (68) zugeordnet ist.

4. Linearantrieb nach Anspruch 3, **dadurch gekennzeichnet, dass** der Verschlussdeckel (68) vom Abschlussdeckel (3, 4) komplett abnehmbar ausgebildet ist.

5. Linearantrieb nach Anspruch 3 oder 4, **dadurch gekennzeichnet, dass** der Verschlussdeckel (68) mit der die Montageaussparung (58) aufweisenden Seitenwand (23) des Abschlussdeckels (3, 4) lösbar verrastet ist.

6. Linearantrieb nach einem der Ansprüche 1 bis 5, **dadurch gekennzeichnet, dass** sich die Montageaussparung (58) ausgehend von der dem Zwischenstück (5) zugewandten inneren Stirnfläche (66) des Abschlussdeckels (3, 4) über den gesamten Durchmesser der im zugeordneten Abschlussdeckel (3, 4) angeordneten Umlenkrolle (26, 27) hinweg erstreckt.

7. Linearantrieb nach einem der Ansprüche 1 bis 6, **dadurch gekennzeichnet, dass** die Montageaussparung (58) an der dem Längsschlitz (45) des Zwischenstücks (5) entgegengesetzten Stirnseite durch einen Wandabschnitt (63) der Seitenwand (23) des Abschlussdeckels (3, 4) begrenzt ist.

8. Linearantrieb nach einem der Ansprüche 1 bis 7, **dadurch gekennzeichnet, dass** der dem Längsschlitz (45) zugeordnete Trum (38) des Zahnriemens (12) unterteilt ist und zwei einander zugewandte Endabschnitte (52a, 52b) aufweist, die jeweils mittels eines Verbindungselementes (54) an dem Abtriebsteil (8) befestigt sind, von denen mindestens eines lösbar mit dem Abtriebsteil (8) verbunden ist.

9. Linearantrieb nach Anspruch 8, **dadurch gekennzeichnet, dass** das Verbindungselement (54) durch den Längsschlitz (45) des Zwischenstückes (5) hindurchgreift und insbesondere außerhalb des Längsschlitzes (45) an dem Abtriebsteil (8) befestigt ist.

10. Linearantrieb nach Anspruch 8 oder 9, **dadurch gekennzeichnet, dass** mindestens ein Verbindungselement (54) Bestandteil einer Spannvorrichtung (53) ist und durch ein Spannelement (57) in bezüglich dem Abtriebsteil (8) unterschiedlichen Axialpositionen festsetzbar ist, um die Spannung des Zahnriemens (12) einzustellen.

11. Linearantrieb nach einem der Ansprüche 8 bis 10, **dadurch gekennzeichnet, dass** die Montageaussparung (58) ausgehend von ihrer dem Zwischenstück (5) zugewandten offenen Stirnseite eine Länge aufweist, die mindestens der Länge des Verbindungselementes (54) entspricht, wobei zugleich der Abstand zwischen der Umlenkrolle (26, 27) und dem Zwischenstück (5) ausreichend groß bemessen ist, damit das Verbindungselement (54) dazwischen hindurchführbar ist.

12. Linearantrieb nach einem der Ansprüche 1 bis 11, **dadurch gekennzeichnet, dass** zumindest die in einem mit einer Montageaussparung (58) versehenen Abschlussdeckel (3, 4) angeordnete Umlenkrolle (26, 27) vollständig innerhalb des Abschlussdeckels (3, 4) untergebracht ist.

13. Linearantrieb nach einem der Ansprüche 1 bis 12, **dadurch gekennzeichnet, dass** der die Montageaussparung (58) aufweisende Abschlussdeckel (3, 4) zumindest an derjenigen Längsseite des Gehäuses (2) an der sich auch der Längsschlitz (45) befindet, seitlich über die Außenfläche des Zwischenstükkes (5) vorsteht.

14. Linearantrieb nach einem der Ansprüche 1 bis 13, **dadurch gekennzeichnet, dass** zumindest der mit einer Montageaussparung (58) versehene Abschlussdeckel (3, 4) becherförmig ausgebildet ist und einen Innenraum (65) begrenzt, der zu dem Zwischenstück (5) hin offen ist, wobei die Montageaussparung (58) nach Art eines Einschnittes in die Seitenwand (23) des Abschlussdeckels (3, 4) eingebracht ist und nach innen zu dem Innenraum (65), stirnseitig zu dem Zwischenstück (5) hin, sowie zur Außenfläche der Seitenwand (23) hin durchgehend offen ist.

15. Linearantrieb nach einem der Ansprüche 1 bis 14, **dadurch gekennzeichnet, dass** eine der Umlenkrollen (26, 27) als Antriebsrolle ausgebildet ist, die mit einem außen an dem zugeordneten Abschlussdeckel (3, 4) angebauten oder anbaubaren Elektromotor (7) in antriebsmäßiger Verbindung steht.

16. Linearantrieb nach einem der Ansprüche 1 bis 15, **dadurch gekennzeichnet, dass** das Abtriebsteil (8) über eine Linearführungseinrichtung (15) außen am Zwischenstück (5) linear verschiebbar gelagert ist.

## Claims

1. Electrical linear drive, with a housing (2) which has two end covers (3, 4) and an intermediate element (5) extending between the former, which together bound a housing interior (13) in which is mounted a toothed belt (12), looped around two guide pulleys (26, 27) located in the area of the end covers (3, 4), and movement-coupled to an output member (8) mounted outside the housing (2) through a longitudinal slot (45) made in the wall of the intermediate element (5), wherein a strand (38) of the toothed belt (12) covers from the inside the longitudinal slot (45) which is narrower than the toothed belt (12), and wherein at least one guide pulley (26, 27) is mounted inside the end cover (3, 4) assigned to it, **characterised in that** on at least one end face the longitudinal slot (45) merges as a continuing axial extension into a slit-shaped fitting recess (58) formed in the side wall (23), adjoining the intermediate element (5), of the end cover (3, 4) accommodating the guide pulley (26, 27), and which has a width (B) greater than the width (b) of the toothed belt (12), so that the toothed belt (12) may be guided through the fitting recess (58) for its fitting and removal.

2. Linear drive according to claim 1, **characterised in that** the two guide pulleys (26, 27) are mounted in an internal space (65) of the respectively assigned end cover (3, 4), wherein both end covers (3, 4) are provided with a fitting recess (58) leading into the internal space (65).

3. Linear drive according to claim 1 or 2, **characterised in that** the fitting recess (58) is assigned a cover plate (68) serving for its releasable sealing.

4. Linear drive according to claim 3, **characterised in that** the cover plate (68) is designed so as to be completely removable from the end cover (3, 4).

5. Linear drive according to claim 3 or 4, **characterised in that** the cover plate (68) is releasably latched to the side wall (23) of the end cover (3, 4) which has the fitting recess (58).

6. Linear drive according to any claims 1 to 5 **characterised in that** the fitting recess (58), starting from the inner end face (66) of the end cover (3, 4) facing the intermediate element (5), extends over the whole diameter of the guide pulley (26, 27) mounted in the assigned end cover (3, 4).

7. Linear drive according to any of claims 1 to 6, **characterised in that** the fitting recess (58) is bounded on the end face opposite the longitudinal slot (45) of the intermediate element (5) by a wall section (63) of the side wall (23) of the end cover (3, 4).

8. Linear drive according to any of claims 1 to 7, **characterised in that** the strand (38) of the toothed belt (12) assigned to the longitudinal slot (45) is divided and has two end sections (52a, 52b) facing one another, each fastened to the output member (8) by means of a connecting element (54), with at least one of them being connected releasably to the output member (8).

9. Linear drive according to claim 8, **characterised in that** the connecting element (54) reaches through the longitudinal slot (45) of the intermediate element (5) and in particular is attached to the output member (8) outside the longitudinal slot (45).

10. Linear drive according to claim 8 or claim 9, **characterised in that** at least one connecting element (54) is an integral part of a tensioning device (53) and may be fixed in different axial positions relative to the output member (8) by a tensioning element (57), in order to set the tensioning of the toothed belt (12).

11. Linear drive according to any of claims 8 to 10 **characterised in that** the fitting recess (58), starting from its open end face facing the intermediate element (5), has a length corresponding at least to the length of the connecting element (54), while at the same time the clearance between the guide pulley (26, 27) and the intermediate element (5) is made sufficiently large to allow the connecting element (54) to be guided through between it.

12. Linear drive according to any of claims 1 to 11, **characterised in that** at least the guide pulley (26, 27) mounted in an end cover (3, 4) provided with a fitting recess (58) is accommodated entirely within the end cover (3, 4).

13. Linear drive according to any of claims 1 to 12, **characterised in that** the end cover (3, 4) with the fitting recess (58) protrudes to the the side beyond the outer surface of the intermediate element (5), at least on that side wall of the housing (2) on which the longitudinal slot (45) is located.

14. Linear drive according to any of claims 1 to 13, **characterised in that** at least the end cover (3, 4) provided with a fitting recess (58) is cup-shaped and bounds an internal space (65) which is open towards the intermediate element (5), wherein the fitting recess (58) is made in the side wall (23) of the end cover (3, 4) in the manner of a slit and is continuously open inwards to the internal space (65), at the end towards the intermediate element (5) and towards the outer surface of the side wall (23).

15. Linear drive according to any of claims 1 to 14, **characterised in that** one of the guide pulleys (26, 27) is designed as a drive pulley, in driving connection with an electric motor (7), attached or attachable to the outside of the assigned end cover (3, 4).

16. Linear drive according to any of claims 1 to 15, **characterised in that** the output member (8) is mounted on the outside of the intermediate element (5) via a linear guidance device (15) and capable of linear movement.

## Revendications

1. Entraînement linéaire électrique, avec un boîtier (2) qui présente deux capots de fermeture frontaux (3, 4) et un élément intermédiaire (5) s'étendant entre ces derniers qui délimitent ensemble un espace intérieur du boîtier (13) dans lequel est disposée une courroie crantée (12) passant autour de deux poulies de renvoi (26, 27) disposées dans la zone des capots de fermeture (3, 4) et reliée de manière mobile, à travers une fente longitudinale (45) formée dans la paroi de l'élément intermédiaire (5), à un élément entraîné (8) disposé à l'extérieur du boîtier (2), dans lequel un brin (38) de la courroie crantée (12) recouvre de l'intérieur la fente longitudinale (45) réalisée plus étroite que la courroie crantée (12) et au moins une poulie de renvoi (26, 27) est disposée à l'intérieur du capot de fermeture (3, 4) qui lui est associé, **caractérisé en ce que** la fente longitudinale (45) communique sur au moins une face frontale avec un évidement de montage en forme d'encoche (58) qui la prolonge dans le sens axial, lequel évidement est formé dans la paroi latérale (23) adjacente à l'élément intermédiaire (5) du capot de fermeture (3, 4) qui reçoit les poulies de renvoi (26, 27) et possède une largeur (B) supérieure à la largeur (b) de la courroie crantée (12) de façon que la courroie crantée (12) puisse passer à travers l'évidement de montage (58) pour être montée et démontée.

2. Entraînement linéaire selon la revendication 1, **caractérisé en ce que** les deux poulies de renvoi (26, 27) sont disposées dans un espace intérieur (65) du capot de fermeture (3, 4) respectivement associé, les deux capots de fermeture (3, 4) étant dotés d'un évidement de montage (58) qui débouche dans l'espace intérieur (65).

3. Entraînement linéaire selon la revendication 1 ou la revendication 2, **caractérisé en ce que** l'évidement de montage (58) est associé à un cache de fermeture (68) qui sert à le fermer de manière amovible.

4. Entraînement linéaire selon la revendication 3, **caractérisé en ce que** le cache de fermeture (68) est réalisé de manière à pouvoir être retiré complètement du capot de fermeture (3, 4).

5. Entraînement linéaire selon la revendication 3 ou la revendication 4, **caractérisé en ce que** le cache de fermeture (68) est encliqueté de manière amovible dans la paroi latérale (23) du capot de fermeture (3, 4) qui présente l'évidement de montage (58).

6. Entraînement linéaire selon l'une des revendications 1 à 5, **caractérisé en ce que** l'évidement de montage (58) s'étend depuis la surface frontale intérieure (66) du capot de fermeture (3, 4) qui fait face à l'élément intermédiaire (5) sur tout le diamètre de la poulie de renvoi (26, 27) disposée dans le capot de fermeture (3, 4) qui lui est associé.

7. Entraînement linéaire selon l'une des revendications 1 à 6, **caractérisé en ce que** l'évidement de montage (58) est limité sur la face frontale de l'élément intermédiaire (5) opposée à la fente longitudinale (45) par un segment (63) de la paroi latérale (23) du capot de fermeture (3, 4).

8. Entraînement linéaire selon l'une des revendications 1 à 7, **caractérisé en ce que** le brin (38) de la courroie crantée (12) associé à la fente longitudinale (45) est divisé et présente deux segments d'extrémité (52a, 52b) qui se font face et qui sont fixés chacun au moyen d'un élément de liaison (54) à l'élément entraîné (8), l'un au moins de ces segments étant relié de manière amovible à l'élément entraîné (8).

9. Entraînement linéaire selon la revendication 8, **caractérisé en ce que** l'élément de liaison (54) passe à travers la fente longitudinale (45) de l'élément intermédiaire (5) et en particulier est fixé à l'élément entraîné (8) à l'extérieur de la fente longitudinale (45).

10. Entraînement linéaire selon la revendication 8 ou la revendication 9, **caractérisé en ce qu'**au moins un élément de liaison (54) fait partie intégrante d'un dispositif tendeur (53) et peut être réglé au moyen d'un élément tendeur (57) dans différentes positions axiales par rapport à l'élément entraîné (8) afin d'ajuster la tension de la courroie crantée (12).

11. Entraînement linéaire selon l'une des revendications 8 à 10, **caractérisé en ce que** l'évidement de montage (58) présente depuis sa face frontale ouverte en direction de l'élément intermédiaire (5) une longueur qui correspond au minimum à la longueur de l'élément de liaison (54), la distance entre la poulie de renvoi (26, 27) et l'élément intermédiaire (5) étant en même temps dimensionnée à une cote suffisante pour pouvoir faire passer l'élément de liaison (54) entre eux.

12. Entraînement linéaire selon l'une des revendications 1 à 11, **caractérisé en ce qu'**au moins la poulie de renvoi (26, 27) disposée dans un capot de fermeture (3, 4) muni d'un évidement de montage (58) est montée entièrement à l'intérieur du capot de fermeture (3, 4).

13. Entraînement linéaire selon l'une des revendications 1 à 12, **caractérisé en ce que** le capot de fermeture (3, 4) qui présente l'évidement de montage (58) dépasse latéralement de la surface extérieure de l'élément intermédiaire (5) au moins sur la face longitudinale du boîtier (2) sur laquelle se trouve également la fente longitudinale (45).

14. Entraînement linéaire selon l'une des revendications 1 à 13, **caractérisé en ce qu'**au moins le capot de fermeture (3, 4) comprenant un évidement de montage (58) est réalisé en forme de godet et délimite un espace intérieur (65) qui est ouvert en direction de l'élément intermédiaire (5), l'évidement de montage (58) étant ménagé à la manière d'une encoche dans la paroi latérale (23) du capot de fermeture (3, 4) et ouvert de bout en bout vers l'intérieur en direction de l'espace intérieur (65), frontalement en direction de l'élément intermédiaire (5), ainsi qu'en direction de la surface extérieure de la paroi latérale (23).

15. Entraînement linéaire selon l'une des revendications 1 à 14, **caractérisé en ce que** l'une des poulies de renvoi (26, 27) est réalisée sous la forme d'une poulie motrice reliée de manière à pouvoir être entraînée à un moteur électrique (7) monté ou montable sur le capot de fermeture (3, 4) associé.

16. Entraînement linéaire selon l'une des revendications 1 à 15, **caractérisé en ce que** l'élément entraîné (8) est supporté de manière à pouvoir se déplacer linéairement au moyen d'un dispositif de guidage linéaire (15) à l'extérieur de l'élément intermédiaire (5).
